# FASCICULE DE BREVET EUROPEEN

(11) **EP 4 184 936 B1**
(45) Date de publication et mention de la délivrance du brevet: **24.04.2024**
(21) Numéro de dépôt: 22207795.0
(22) Date de dépôt: 16.11.2022
(51) Int. Cl.: H04Q 9/00, H04L 67/12

(54) **PROCÉDÉ DE RECONNEXION D'UN COMPTEUR ÉLECTRIQUE INTELLIGENT ET COMPTEUR ÉLECTRIQUE INTELLIGENT IMPLÉMENTANT LEDIT PROCÉDÉ**
VERFAHREN ZUR WIEDERVERBINDUNG EINES INTELLIGENTEN STROMZÄHLERS UND INTELLIGENTER STROMZÄHLER, DER DIESES VERFAHREN UMSETZT
METHOD FOR RECONNECTING A SMART ELECTRICITY METER AND SMART ELECTRICITY METER IMPLEMENTING SAID METHOD

(30) Priorité: 19.11.2021 FR 2112258
(43) Date de publication de la demande: 24.05.2023
(73) Titulaire: Sagemcom Energy & Telecom SAS, 92270 Bois-Colombes (FR)
(72) Inventeur: TEBOULLE, Henri, 92500 Rueil Malmaison (FR); ROTER, Ziv, 92500 Rueil Malmaison (FR); BERGER, Jean-Philippe, 92500 Rueil Malmaison (FR); SERGI, Jérémie, 92500 Rueil Malmaison (FR)
(74) Mandataire: Cabinet Le Guen Maillet

(56) Documents cités:
- EP-A1- 3 709 671
- FR-A1- 3 081 642

## Description

### DOMAINE TECHNIQUE

La présente invention concerne des réseaux de communication par courants porteurs en ligne (« PowerLine Communications » en anglais), ou par radiofréquences, pour des systèmes de gestion automatisée de comptage AMM (« Automated Metering Management » en anglais). Plus particulièrement, au moins un mode de réalisation concerne un procédé de reconnexion d'un compteur électrique intelligent dans un réseau de communication par courants porteurs en ligne), ou par radiofréquence, pour la gestion automatisée de comptage dans le cadre d'un service de distribution électrique.

### ETAT DE LA TECHNIQUE ANTERIEURE

Les réseaux de communication par courants porteurs en ligne pour des systèmes de gestion automatisée de comptage AMM ont fait leur apparition ces dernières années, notamment dans le cadre de services de distribution électrique. On peut par exemple citer le standard G3-PLC spécifié dans la recommandation ITU-T G.9903. Dans de tels réseaux de communication par courants porteurs en ligne, des communications sont établies entre des compteurs électriques, dits *compteurs électriques intelligents* (« smart electricity meters » en anglais), et un noeud concentrateur, parfois appelé *concentrateur de données* (« data concentrator » en anglais) ou *nœud de base* (« base node » en anglais) ou *coordinateur* (« coordinator » en anglais), pour permettre notamment une relève automatisée à distance de mesures de consommation électrique effectuées par lesdits compteurs électriques intelligents et pour permettre d'une manière générale une prise de contrôle à distance des compteurs électriques intelligents. Plusieurs concentrateurs de données sont alors géographiquement déployés pour répartir la charge de collecte de relevés de comptage des compteurs électriques intelligents. Chaque concentrateur de données sert alors de relais entre un ensemble de compteurs électriques intelligents et une entité de gestion du système de gestion automatisée de comptage AMM qui est en charge de traiter de manière centralisée les relevés de comptage.

Depuis quelques années, les réseaux de communication peuvent également fonctionner en mode hybride courants porteurs en ligne / radiofréquences de manière à permettre d'accroître les performances de collecte. On peut par exemple citer le standard G3-PLC spécifié dans la recommandation ITU-T G.9903 à partir de la version 2021 qui intègre le mode hybride.

Dans le cas où un concentrateur de données tombe en panne, il est connu que les compteurs électriques intelligents qui lui étaient rattachés essayent de se connecter à des concentrateurs de données situés dans leur voisinage géographique. Or, une telle solution crée des déséquilibres dans le réseau, certains concentrateurs de données pouvant se retrouver à gérer la relève de mesures de consommation électrique d'un grand nombre de compteurs électriques intelligents alors que d'autres concentrateurs de données ne gèrent, au contraire, la relève de mesures de consommation électrique que d'un très petit nombre de compteurs électriques intelligents.

Le document FR 3 081 642 A1décrit le réenregistrement d'un compteur électrique intelligent dans un réseau de communication par courants porteurs en ligne, suite à une déconnexion du compteur électrique intelligent. Un réseau de communication par courants porteurs en ligne est formé entre un dispositif concentrateur de données et des compteurs électriques intelligents qui lui sont connectés.

Il est alors souhaitable de pallier ces inconvénients de l'état de la technique. Il est notamment souhaitable de fournir une solution qui permette de répartir la charge de collecte de relevés de comptage de manière équilibrée entre les différents concentrateurs de données.

### EXPOSE DE L'INVENTION

Un premier mode de réalisation concerne un procédé de reconnexion d'un compteur électrique intelligent connecté à un concentrateur de données, dit concentrateur de données courant, dans un réseau de communication par courants porteurs en ligne ou par radiofréquences pour la gestion automatisée de comptage dans le cadre d'un service de distribution électrique. Le procédé comprend les étapes suivantes implémentées par ledit compteur électrique intelligent :
- se déconnecter du concentrateur de données courant dans le cas où le ledit concentrateur de données courant pose problème ;
- se connecter à un concentrateur de données voisin différent dudit concentrateur de données courant ;
- écouter les trames contenant un identifiant dudit concentrateur de données courant ;
- se déconnecter du concentrateur de données voisin et se reconnecter à un concentrateur de données utilisant le même identifiant que le concentrateur de données courant quand au moins N trames contenant l'identifiant dudit concentrateur de données courant sont reçues, avec N un entier supérieur ou égal à 1.

Le procédé permet un rééquilibrage de la charge de collecte de relevés de comptage entre les différents concentrateurs de données, suite par exemple à une panne du concentrateur de données courant, en permettant notamment une reconnexion automatique à un concentrateur de données de remplacement utilisant le même identifiant que le concentrateur de données en panne.

Dans un mode particulier de réalisation, se déconnecter du concentrateur de données voisin et se reconnecter à un concentrateur de données utilisant le même identifiant que le concentrateur de données courant quand au moins N trames contenant l'identifiant dudit concentrateur de données courant sont reçues comprend se déconnecter du concentrateur de données voisin et se reconnecter à un concentrateur de données utilisant le même identifiant que le concentrateur de données courant quand au moins N trames contenant l'identifiant dudit concentrateur de données courant sont reçues et une qualité de lien entre ledit compteur électrique intelligent et ledit concentrateur de données utilisant le même identifiant que le concentrateur de données courant est supérieure à une valeur de seuil prédéfinie.

Dans un mode particulier de réalisation, le procédé comprend une étape consistant à déterminer que ledit concentrateur de données courant pose problème quand ledit compteur électrique intelligent n'a reçu aucune trame dudit concentrateur de données courant pendant une durée prédéfinie T0.

Dans un mode particulier de réalisation, le procédé comprend une étape consistant à déterminer que ledit concentrateur courant pose problème quand ledit compteur électrique intelligent n'a reçu aucune trame dudit concentrateur de données courant pendant une durée prédéfinie TO ou que la qualité d'échanges de trames entre ledit compteur électrique intelligent et le concentrateur de données courant est insuffisante, et à condition que ledit compteur électrique intelligent soit à l'écoute d'un concentrateur de données voisin différent dudit concentrateur de données courant.

En variante, le procédé comprend une étape consistant à déterminer que ledit concentrateur de données courant pose problème quand un temps écoulé depuis la dernière réception par ledit compteur électrique intelligent d'une trame spécifique représentative d'une activité du concentrateur de données courant est supérieur ou égal à une durée prédéfinie T0.

Selon une caractéristique particulière, T0 est égal à 24 heures.

Dans un mode particulier de réalisation, ledit concentrateur de données courant est un concentrateur de données pour lequel la connexion avec ledit compteur électrique intelligent a fonctionné sans anomalie pendant une durée prédéfinie T.

Selon une caractéristique particulière, T est égal à une semaine.

Dans un mode particulier de réalisation, le compteur électrique intelligent établit une liste L ordonnée de concentrateurs de données auxquels potentiellement se connecter, le compteur électrique intelligent réorganise la liste L en plaçant le concentrateur de données favori en début de liste si la valeur d'un compteur d'échecs de connexion audit concentrateur de données favori est inférieure à un seuil T7 prédéfini, et le compteur électrique intelligent réorganise la liste L en plaçant le concentrateur de données voisin duquel ledit compteur électrique intelligent s'est déconnecté en fin de liste.

Selon une caractéristique particulière, T7 est égal à 3.

Dans un mode particulier de réalisation, se connecter à un concentrateur de données voisin comprend :
- mettre l'identifiant du concentrateur de données courant sur liste noire pendant une durée prédéfinie T1 ;
- démarrer un processus de connexion à un concentrateur de données du réseau pour se connecter à un concentrateur de données voisin différent dudit concentrateur de données courant.

Selon une caractéristique particulière, T1 est égal à 24 heures.

Au moins un mode de réalisation concerne un compteur électrique intelligent connecté à un concentrateur de données, dit concentrateur de données courant, dans un réseau de communication par courants porteurs en ligne ou par radiofréquences pour la gestion automatisée de comptage dans le cadre d'un service de distribution électrique. Le compteur électrique intelligent comprend :
- des moyens pour se déconnecter du concentrateur de données courant dans le cas où le ledit concentrateur de données courant pose problème ;
- des moyens pour se connecter à un concentrateur de données voisin différent dudit concentrateur de données courant ;
- des moyens pour écouter des trames contenant l'identifiant dudit concentrateur de données courant ;
- des moyens pour se déconnecter du concentrateur de données voisin et pour se connecter à un concentrateur de données utilisant le même identifiant que le concentrateur de données courant quand au moins N trames sont reçues, avec N un entier supérieur ou égal à 1.

Un produit programme d'ordinateur est également décrit qui comprend des instructions pour implémenter le procédé de reconnexion selon l'un quelconque des modes de réalisation précédent, lorsque ledit programme est exécuté par un processeur.

Un support de stockage est également décrit qui stocke un programme d'ordinateur comprenant des instructions pour implémenter le procédé de reconnexion selon l'un quelconque des modes de réalisation précédent, lorsque ledit programme est exécuté par un processeur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un exemple d'un système de communication, supportant une gestion automatisée de comptage AMM dans le cadre de services de distribution électrique ;
[Fig. 2] illustre schématiquement un exemple d'architecture matérielle d'un compteur électrique intelligent utilisé dans le système de communication de la Fig. 1 ;
[Fig. 3] illustre schématiquement un procédé de connexion d'un compteur électrique intelligent à un concentrateur de données selon l'état de l'art ;
[Fig. 4] illustre schématiquement un procédé de connexion d'un compteur électrique intelligent à un concentrateur de données selon un mode particulier de réalisation ;
[Fig. 5] illustre schématiquement un procédé de connexion d'un compteur électrique intelligent à un concentrateur de données selon un mode particulier de réalisation ;
[Fig. 6] illustre schématiquement un procédé de gestion de connexion d'un compteur électrique intelligent à un concentrateur de données selon un mode particulier de réalisation ;
[Fig. 7] illustre schématiquement un procédé de sélection et connexion d'un compteur électrique intelligent à un concentrateur de données dans le cadre du procédé de gestion de la Fig. 6 ;
[Fig. 8] illustre schématiquement un procédé de recherche d'un concentrateur de données favori dans le cadre du procédé de gestion de la Fig. 6 ;
[Fig. 9] illustre schématiquement un procédé de détection de concentrateur de données alternatif dans le cadre du procédé de gestion de la Fig. 6 ;
[Fig. 10] illustre schématiquement un procédé de détection d'inactivité dans le cadre du procédé de gestion de la Fig. 6 ; et,
[Fig. 11] illustre schématiquement un procédé d'évaluation d'un concentrateur de données actuel dans le cadre du procédé de gestion de la Fig. 6.

### EXPOSE DETAILLE DE MODES DE REALISATION

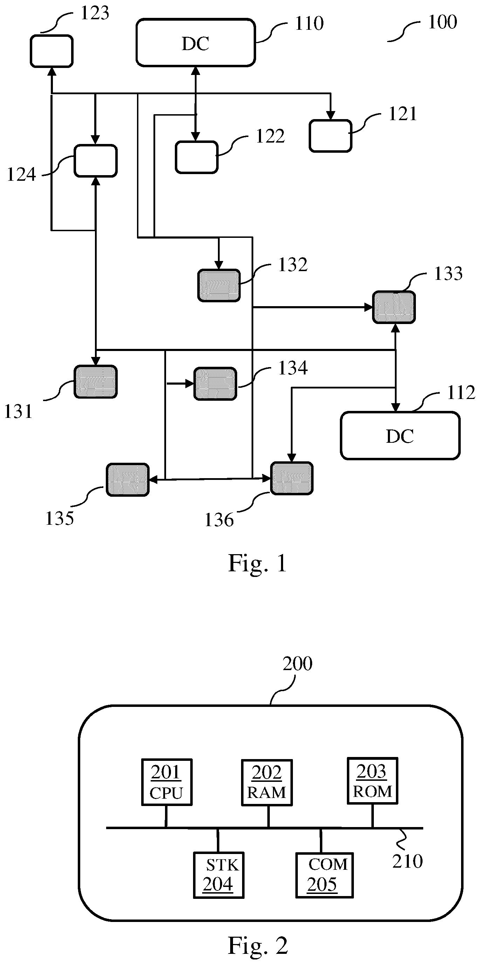

La Fig. 1 illustre ainsi schématiquement un exemple d'un système de communication, supportant une gestion automatisée de comptage AMM dans le cadre de services de distribution électrique, dans lequel la présente invention est implémentée.

Le système de communication comporte au moins un réseau de communication par courants porteurs en ligne PLCN (« PowerLine Communications Network » en anglais) 100, simplement dénommé réseau PLCN 100 par la suite, déployé de manière logique sur un réseau d'alimentation électrique. Le réseau PLCN 100 permet la mise en place d'un système de gestion automatisée de comptage AMM dans le cadre des services de distribution électrique. En variante du réseau de communication par courants porteurs en ligne PLCN, le système de communication peut comporter un réseau de communication par radiofréquences. Par exemple, le système de communication implémente un mode hybride dans lequel la gestion automatisée de comptage AMM s'appuie sur un réseau de communication par courants porteurs en ligne PLCN ou sur un réseau de communication par radiofréquences. Par la suite, l'invention est décrite plus particulièrement dans un contexte de réseau de communication par courants porteurs en ligne PLCN, mais s'applique de manière similaire dans un contexte de réseau de communication par radiofréquences.

Le système de communication comporte une pluralité de dispositifs noeuds particuliers, appelés concentrateurs de données DC 110 et 112. Le réseau PLCN 100 est destiné à permettre de connecter une pluralité de dispositifs noeuds aux concentrateurs de données DC 110 et 112. Les dispositifs noeuds que le réseau PLCN 100 vise à connecter aux concentrateurs de données DC 110 et 112 sont des compteurs électriques intelligents SEM (« smart electricity meters » en anglais) 121, 122, 123, 124, 131, 132, 133, 134, 135, 136. Plus précisément, les compteurs électriques intelligents 121 à 124 sont connectés au concentrateur de données 110 et les compteurs électriques intelligents 131 à 136 sont connectés au concentrateur de données 112. Les concentrateurs de données implémentent des fonctions de coordination et accordent aux compteurs électriques intelligents un accès au réseau après authentification. Le réseau PLCN 100 permet ainsi d'établir des communications par courants porteurs en ligne (« powerline communications » en anglais), afin que les concentrateurs de données DC 110 et 112 puissent notamment procéder automatiquement à des opérations de collecte de relevés de comptage de consommation électrique, ledit comptage étant effectué par les compteurs électriques intelligents vis-à-vis d'installations électriques que lesdits compteurs électriques intelligents sont respectivement en charge de superviser. Le réseau PLCN 100 permet en outre aux concentrateurs de données DC 110 et 112 de procéder à des opérations de mise à jour applicative auprès des compteurs électriques intelligents, et d'une manière générale, de contrôler à distance lesdits compteurs électriques intelligents. Les communications par courants porteurs en ligne via le réseau PLCN 100 sont par exemple conformes au protocole G3-PLC. En variante, les communications par courants porteurs en ligne via le réseau PLCN 100 sont conformes aux spécifications PRIME (« PoweRline Intelligent Metering Evolution » en anglais, telles que définies dans le document normatif ITU G.9904). Ces protocoles construisent un réseau de communication logique PAN (acronyme anglais de « Personal Area Network »), superposé au réseau électrique physique.

Le système de communication comporte en outre une entité de gestion SI (non représentée sur la Fig.1) du système de gestion automatisée de comptage AMM qui est notamment en charge de traiter de manière centralisée les relevés de comptage. L'entité de gestion SI du système de gestion automatisée de comptage AMM prend par exemple la forme d'un serveur, ou d'un ensemble de serveurs, auquel les concentrateurs de données DC 110 et 112 sont connectés via des liens de communication filaire ou sans-fil, par exemple de type GPRS (« General Packet Radio Service » en anglais), UMTS (« Universal Mobile Telecommunication System » en anglais) ou LTE (« Long-Term Evolution » en anglais). Les concentrateurs de données DC 110 et 112 effectuent les opérations de collecte de relevés de comptage pour le compte de l'entité de gestion SI auprès de laquelle ils sont identifiés grâce à un identifiant réseau PAN-ID (acronyme anglais de « Personal Area Network IDentifier »), e.g. de 16 bits, qui leur est propre et qui leur est attribué statiquement par l'utilisateur final. En d'autres termes, le concentrateur de données DC 110 collecte les relevés de comptage auprès des compteurs électriques intelligents qui lui sont connectés *(i.e.* les compteurs électriques intelligents 121 à 124 du réseau PLCN 100), puis fournit lesdits relevés à l'entité de gestion SI pour traitement.

De la même manière, le concentrateur de données DC 112 collecte les relevés de comptage auprès des compteurs électriques intelligents qui lui sont connectés (*i.e.* les compteurs électriques intelligents 131 à 136 du réseau PLCN 100), puis fournit lesdits relevés à l'entité de gestion SI pour traitement. Les concentrateurs de données DC 110 et 112 gèrent les éventuels besoins de retransmission au sein du réseau PLCN 100 pour assurer un bon déroulement des opérations de collecte de relevés de comptage. Il est à noter qu'un compteur électrique intelligent peut être relié à un concentrateur de données par l'intermédiaire d'autres compteurs électriques intelligents servant alors de relais. En effet, la taille du réseau électrique et ses caractéristiques ne permettent pas à tous les compteurs électriques intelligents de transmettre un message directement à un concentrateur de données. Il est donc nécessaire d'utiliser certains compteurs comme relais.

Dans la suite du document, les termes « connecté » et « rattaché » sont utilisés de manière interchangeable.

La Fig. 2 illustre schématiquement un exemple d'architecture matérielle d'un compteur électrique intelligent 200 utilisé dans le système de communication de la Fig. 1.

Selon l'exemple d'architecture matérielle représenté à la Fig. 1, le compteur électrique intelligent 200 comprend alors, reliés par un bus de communication 210 : un processeur ou CPU (« Central Processing Unit » en anglais) 201; une mémoire vive RAM (« Random Access Memory » en anglais) 202; une mémoire morte ROM (« Read Only Memory » en anglais) 203; une unité de stockage 204 telle qu'un disque dur ou telle qu'un lecteur de support de stockage, e.g. un lecteur de cartes SD (« Secure Digital » en anglais); au moins une interface de communication 205 permettant au compteur électrique intelligent 200 d'envoyer des informations vers un concentrateur de données ou, le cas échéant, d'en recevoir.

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le compteur électrique intelligent 200 est mis sous tension, le processeur 201 est capable de lire des instructions dans la RAM 202 et de les exécuter. Ces instructions forment un programme d'ordinateur causant l'implémentation, par le processeur 201, de tout ou partie des procédés et étapes décrits ici.

Les procédés et étapes décrits ici peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais).

Ainsi, le compteur électrique intelligent 200 comporte de la circuiterie électronique configurée pour implémenter les procédés et étapes décrits ici.

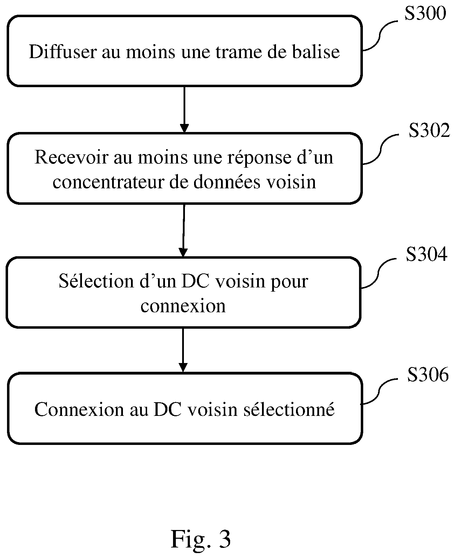

La Fig. 3 illustre schématiquement un procédé de connexion d'un compteur électrique intelligent à un concentrateur de données selon l'état de l'art.

Lors d'une étape S300, le compteur électrique intelligent cherchant à se connecter à un concentrateur de données diffuse (« broadcast » en anglais) au moins une trame de balise (« beacon frame » en anglais) *BeaconRequest* afin de découvrir son environnement proche. Cette trame de balise *BeaconRequest* indique qu'il souhaite se connecter à un concentrateur de données. Cette trame de balise *BeaconRequest* est reçue par des compteurs électriques intelligents et concentrateurs de données voisins, i.e. des dispositifs en mesure de recevoir et décoder avec succès les *BeaconRequest* envoyés. Ils y répondent en envoyant à leur tour une trame de balise *BeaconResponse* qui comprend le PAN-ID et l'adresse MAC courte (i.e. une adresse temporaire sur 16 bits (l'adresse MAC complète faisant 64 bits) attribuée par le DC) qui leur a été attribuée. Il est à noter que les compteurs électriques intelligents déjà authentifiés auprès d'un concentrateur de données sont aussi susceptibles de répondre au *BeaconRequest.* Ils proposent leurs services en tant qu'« Agent » pour relayer la demande d'authentification vers le concentrateur de de données auquel ils sont rattachés.

Lors d'une étape S302, le compteur électrique intelligent reçoit une réponse *BeaconResponse* d'au moins une partie des compteurs électriques intelligents ou concentrateurs de données voisins ayant reçu la trame de balise *BeaconRequest.* Il est à noter que certains compteurs électriques intelligents ou concentrateurs de données voisins ayant reçu la trame de balise *BeaconRequest* ont pu envoyer une réponse qui n'est jamais parvenue au compteur électrique intelligent. Ainsi, les réponses reçues permettent au compteur électrique intelligent de connaître son environnement proche et notamment de connaître les concentrateurs de données voisins auxquels il est susceptible de se connecter soit directement, soit par l'intermédiaire d'un compteur électrique intelligent intervenant en tant que « Agent », i.e. servant de relai entre le compteur électrique intelligent ayant émis le *BeaconRequest* et le concentrateur de données.

Lors d'une étape S304, le compteur électrique intelligent sélectionne l'un des compteurs électriques intelligents ou concentrateurs de données voisins desquels il a reçu une réponse. Par exemple, le compteur électrique intelligent sélectionne le compteur électrique intelligent ou concentrateur de données voisin avec lequel la qualité de signal reçu, estimée sur le *BeaconResponse* est la meilleure.

Lors d'une étape S306, le compteur électrique intelligent se connecte au concentrateur de données voisin sélectionné. Cette étape comprend généralement l'authentification du compteur électrique intelligent par échange de données d'identification entre le compteur électrique intelligent et le concentrateur de données au besoin au travers de compteurs électriques intelligents servant de relais. Par exemple, dans le cas de la norme G3-PLC, le protocole d'authentification EAP-PSK est mis en oeuvre. Une fois, le compteur électrique intelligent authentifié, le concentrateur de données lui donne accès au réseau qu'il coordonne et le compteur électrique intelligent peut alors échanger des données avec lui. Un exemple d'un tel procédé de connexion est par exemple décrit dans le document de l'alliance G3-PLC publié en mars 2017 et intitulé « Narrowband OFDM PLC spécifications for G3-PLC networks »*.*

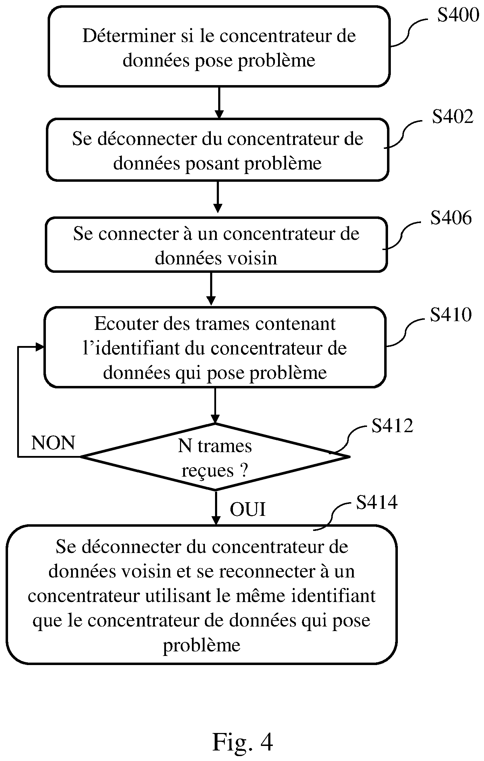

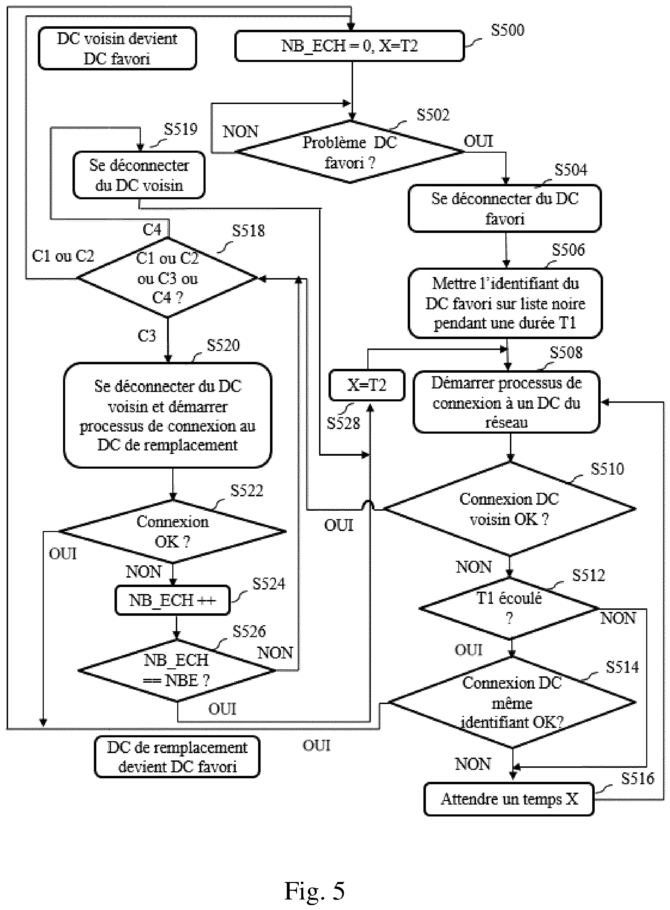

En référence à la Fig. 1, considérant que le concentrateur de données 110 tombe en panne à un instant t, il s'écoule généralement au moins une durée tmin, e.g. tmin= 24h, et moins de tmax, e.g tmax=5 jours, avant qu'il ne soit remplacé. Les durées de tmin et tmax mentionnées ci-dessus sont données à titre indicatif et sont configurables. Généralement, au bout de 24h, i.e. à (t+24h), il n'existe plus de trames comprenant l'identifiant du concentrateur de données 110 tombé en panne circulant dans le réseau PLCN 100, lesdites trames émanant de compteurs électriques intelligents précédemment connectés au concentrateur de données 110. Ainsi, au bout de 24h, les compteurs électriques intelligents précédemment connectés au concentrateur de données 110 sont *de facto* déconnectés de ce dernier. Les compteurs électriques intelligents 121 à 124 qui étaient connectés au concentrateur de données 110 vont alors chercher à se connecter à un concentrateur de données voisin, e.g. au concentrateur de données 112. Dans l'état de l'art, les compteurs électriques intelligents 121 à 124 une fois connectés au concentrateur de données 112 y restent connectés même lorsque le concentrateur de données 110 est remplacé par un nouveau concentrateur de données. Cela crée des déséquilibres dans le réseau. Au contraire, selon le procédé des Figs 4 et 5, le concentrateur de données 112 sert de concentrateur de données de rattachement pour les compteurs électriques intelligents 121 à 124 de manière transitoire, i.e. le temps que le concentrateur de données 110 en panne soit remplacé par un nouveau concentrateur de données ou, s'il s'agit d'une panne transitoire, qu'il se remette à fonctionner correctement. Selon ce mode de réalisation, le nouveau concentrateur de données se voit attribuer le même identifiant PAN-ID₁₁₀ que le concentrateur de données 110 qu'il est destiné à remplacer.

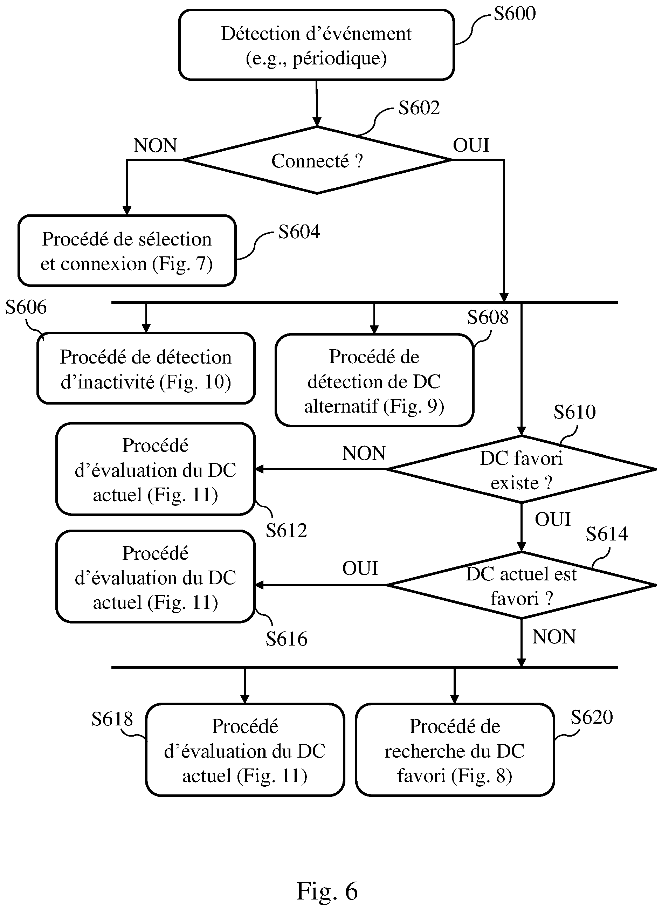

Par ailleurs, le nouveau concentrateur de données est configuré pour diffuser des messages « PING ». En variante, le nouveau concentrateur de données est configuré pour diffuser des messages « PING » tant que le nombre de compteurs électriques intelligents qui lui sont connectés est inférieur à une valeur de seuil prédéfinie, e.g. à 10. Ces messages « PING » ne contiennent pas de données utiles mais comprennent l'identifiant du nouveau concentrateur de données qui est le même que l'identifiant PAN-ID₁₁₀ du concentrateur de données 110 qu'il est destiné à remplacer. Les messages « PING » ainsi diffusés sont écoutés par les compteurs électriques intelligents précédemment connectés au concentrateur de données que le nouveau DC remplace et qui sont à un saut dudit nouveau compteur électrique intelligent, dits compteurs électriques intelligents de « 1^{er} saut ». Ainsi, les compteurs électriques intelligents de « 1^{er} saut » implémentent le procédé de connexion décrit en lien avec la Fig. 4 ou la Fig. 5 afin de se déconnecter d'un éventuel DC voisin et de se connecter au nouveau DC. Grâce à ces compteurs électriques intelligents de « 1^{er} saut » connectés au nouveau DC, d'autres compteurs électriques intelligents (précédemment connectés au concentrateur de données que le nouveau DC remplace) vont pouvoir à leur tour écouter des trames contenant le PAN-ID de l'ancien DC transmises par lesdits compteurs électriques intelligents de « 1^{er} saut », et engager le procédé de connexion à ce nouveau DC décrit en lien avec la Fig. 4 ou la Fig. 5. Une variante de réalisation est aussi décrite ci-après en relation avec la Fig. 6 et suivantes, dans le cadre d'une gestion de connexion d'un compteur électrique intelligent à un concentrateur de données selon un mode particulier de réalisation.

La Fig. 4 illustre schématiquement un procédé de connexion d'un compteur électrique intelligent 122 suite à un problème, e.g. une panne, du concentrateur de données 110 auquel le compteur électrique intelligent 122 est actuellement connecté selon un mode particulier de réalisation. Le procédé décrit en lien avec le compteur électrique intelligent 122 est implémenté par tous les compteurs électriques intelligents connectés au concentrateur de données 110.

Lors d'une étape S400, le compteur électrique intelligent 122 détermine si le concentrateur de données 110 auquel il est connecté pose problème, e.g. est en panne. Dans un mode de réalisation, le compteur électrique intelligent 122 détermine que le concentrateur de données 110 pose problème quand il n'a pas reçu de trame du concentrateur de données 110 pendant une durée prédéfinie T0, e.g. T0=24h (en accord avec la durée tmin susmentionnée).

Dans une variante de réalisation, le compteur électrique intelligent 122 détermine que le concentrateur de données 110 pose problème quand il n'a pas reçu de trame du concentrateur de données 110 pendant une durée prédéfinie T0, e.g. T0=24h, ou quand il constate que la qualité d'échanges de trames au niveau applicatif avec le concentrateur de données auquel il est connecté est insuffisante et qu'il écoute un concentrateur de données voisin, i.e. qu'il écoute les trames contenant l'identifiant PAN-ID du concentrateur de données voisin, auquel il n'est pas connecté. La qualité d'échanges de trames au niveau applicatif est insuffisante quand, par exemple, le taux de réussite d'échanges de trames au niveau applicatif est inférieur à une valeur de seuil TH prédéfinie, e.g. TH=90%. Le taux de réussite d'échanges de trames au niveau applicatif est égal au taux Tx de réception correcte par le concentrateur de données 110 des trames émises par le compteur électrique intelligent 122. Dit autrement, Tx=nombres trames reçues correctement par le concentrateur de données/nombres de trames émises par le compteur électrique intelligent. Eventuellement Tx est exprimé en pourcentage. Dans le cas du protocole de communication DLMS (acronyme anglais de « Device Language Message Spécification ») qui fonctionne par bloc de données, il suffit que le concentrateur de données demande au compteur électrique intelligent un bloc de données pour que ce dernier sache que le bloc de données (ou trame) précédent a été reçu correctement. En revanche, si le concentrateur de données reprend la séquence au tout début, i.e. qu'il redemande le premier bloc de données, alors que la séquence n'était pas terminée, un échec est détecté par le compteur électrique intelligent. Le compteur électrique intelligent peut ainsi déterminer le nombre de trames reçues correctement par le concentrateur de données et par conséquence déterminer le taux Tx.

Lors d'une étape S402, le compteur électrique intelligent 122 se déconnecte du concentrateur de données 110 auquel il est connecté dans le cas où le ledit concentrateur de données 110 pose problème. Cette étape consiste en une déconnexion des liens logiques entre le compteur électrique intelligent 122 et le concentrateur de données 110.

Lors d'une étape S406, le compteur électrique intelligent 122 se rattache à un concentrateur de données voisin, e.g. le concentrateur de données 112. A cet effet, le compteur électrique intelligent 122 implémente le procédé décrit en référence à la Fig. 3. Notamment il envoie au moins une trame de balise, sélectionne un concentrateur de données, e.g. le concentrateur de données 112, parmi les concentrateurs de données voisins ayant répondu et se rattache au concentrateur de données voisin sélectionné.

Lors d'une étape S410, le compteur électrique intelligent 122 se remet à écouter les trames (y compris les messages « PING ») contenant l'identifiant PAN-ID₁₁₀ et attend (étape S412) d'en recevoir au moins N, N étant un entier supérieur ou égal à 1, e.g. N=10. Dans une variante de réalisation, le compteur électrique intelligent 122 attend d'en recevoir au moins N avec un LQI (acronyme anglais de « Link Quality Indicator ») au moins égal à LQIₘᵢₙ, e.g. LQIₘᵢₙ =64. Si N trames sont reçues alors le procédé continue à l'étape S414, sinon il reprend à l'étape 5410.

Lors de l'étape S414, le compteur électrique intelligent 122 se déconnecte du concentrateur de données voisin 112 et se reconnecte au concentrateur de données de remplacement identifié par le PAN-ID₁₁₀. Pour cela, il implémente le procédé décrit en référence à la Fig. 3.

Ainsi, le procédé décrit permet automatiquement de rééquilibrer le réseau en évitant que des concentrateurs de données, e.g. le concentrateur de données 112, aient un grand nombre de compteurs électriques intelligents qui leur soient connectés alors que d'autres concentrateurs de données, p.ex. le nouveau concentrateur de données remplaçant le concentrateur de données 110 qui pose problème n'ait aucun ou peu de compteurs électriques intelligents connectés.

La Fig. 5 illustre schématiquement un procédé de connexion d'un compteur électrique intelligent 122 à un concentrateur de données suite à un problème, e.g. une panne, du concentrateur de données 110 auquel le compteur électrique intelligent 122 est actuellement connecté selon un autre mode particulier de réalisation. Le procédé décrit en lien avec le compteur électrique intelligent 122 est implémenté par tous les compteurs électriques intelligents connectés au concentrateur de données 110. Sur cette figure, le terme DC est utilisé pour signifier concentrateur de données.

Lors d'une étape S500, des variables NB_ECH et X sont initialisées : NB_ECH= 0 et X=T2, e.g. T2 = 15 minutes. NB_ECH est un nombre entier positif ou nul qui représente un nombre de tentatives de connexion à un concentrateur de données de remplacement (dont l'identifiant est identique à l'identifiant PAN-ID₁₁₀ du concentrateur de données qu'il remplace) qui ont échoué. T2 représente une durée.

Lors d'une étape S502, le compteur électrique intelligent 122 détermine s'il existe un problème sur le concentrateur de données 110 auquel il est connecté sans anomalie de communication depuis une durée prédéfinie T. Par exemple, T est égale à 1 semaine. Un tel concentrateur de données est appelé concentrateur de données favori ou DC favori. Pour chaque compteur électrique intelligent, le concentrateur de données favori correspond donc au dernier concentrateur de données auquel il a été connecté sans problème pendant la durée T.

Si le compteur électrique intelligent 122 détermine qu'il existe un problème sur le concentrateur de données favori 110, le procédé continue à l'étape S504, sinon il reprend à l'étape S502.

Dans un mode de réalisation particulier, le compteur électrique intelligent 122 détermine que le concentrateur de données favori 110 pose problème quand il n'a pas reçu de trame du concentrateur de données 110 pendant la durée prédéfinie T0, e.g. T0=24h. Dans une variante de réalisation, le compteur électrique intelligent 122 détermine que le concentrateur de données favori 110 pose problème quand il n'a pas reçu de trame du concentrateur de données 110 pendant une durée prédéfinie T0, e.g. T0=24h ou quand il constate que la qualité d'échanges de trames au niveau applicatif avec son concentrateur de données favori 110 est insuffisante, et à condition qu'il écoute un concentrateur de données voisin auquel il n'est pas connecté. Autrement dit, si le compteur électrique intelligent 122 constate que la qualité d'échanges de trames au niveau applicatif avec son concentrateur de données favori 110 est insuffisante mais qu'il n'écoute pas un concentrateur de données voisin auquel il n'est pas connecté, le procédé reprend à l'étape S502. En effet, dans ce cas il est préférable de rester connecté au concentrateur de données favori 110 même si la qualité d'échanges de trames est insuffisante plutôt que de risquer de se retrouver sans concentrateur de données voisin auquel se connecter.

Lors d'une étape S504, le compteur électrique intelligent 122 se déconnecte du concentrateur de données favori 110 auquel il est connecté. Cette étape consiste en une déconnexion des liens logiques entre le compteur électrique intelligent 122 et le concentrateur de données 110.

Lors d'une étape S506, le compteur électrique intelligent 122 met l'identifiant PAN-ID₁₁₀ du concentrateur de données favori 110 sur une liste noire pendant une durée prédéfinie T1, e.g. T1=24h. Autrement dit, pendant la durée T1, le compteur électrique intelligent 122 ignore les trames contenant l'identifiant PAN-ID₁₁₀ qu'il reçoit. Autrement dit, il cesse d'écouter le concentrateur de données favori 110.

Lors d'une étape S508, le compteur électrique intelligent 122 démarre un processus de connexion à un concentrateur de données du réseau PLCN 100, e.g. le concentrateur de données 112. A cet effet, le compteur électrique intelligent 122 implémente le procédé décrit en référence à la Fig. 3. Notamment, il envoie au moins une trame de balise *BeaconRequest*, sélectionne un concentrateur de données, e.g. le concentrateur de données 112, parmi les concentrateurs de données ayant répondu et se rattache au concentrateur de données sélectionné.

Lors d'une étape S510, le compteur électrique intelligent 122 vérifie si la connexion à un concentrateur de données voisin a fonctionné. Si c'est le cas alors le procédé continue à l'étape S518, sinon il continue à l'étape S512.

A l'étape S512, si le temps T1 est écoulé, le procédé continue à l'étape S514, sinon il continue à l'étape S516.

A l'étape S514, le compteur électrique intelligent 122 vérifie s'il a réussi à se connecter à un concentrateur de données de remplacement de même identifiant PAN-ID₁₁₀ que le concentrateur de données ayant posé problème. S'il a réussi alors le procédé reprend à l'étape S500, le concentrateur de données de remplacement devenant automatiquement le nouveau DC favori, sinon il continue à l'étape S516. A l'étape S516, le compteur électrique intelligent 122 attend pendant une durée prédéfinie X, où X est une valeur aléatoire comprise entre deux valeurs prédéfinies T2 et T4, e.g. T2 = 15 minutes et T4 = 2 heures. X augmente progressivement à chaque nouvelle exécution de l'étape S516 jusqu'à atteindre T4, auquel cas X reste aléatoire et compris entre T4-30 minutes et T4 et ne croît plus. A la fin de l'attente le procédé reprend à l'étape S508.

A l'étape S518, le compteur électrique intelligent 122 vérifie si au moins une des conditions suivantes est remplie, et il reste à l'étape S518 tant qu'aucune des conditions n'est remplie (auquel cas le compteur électrique intelligent 122 reste connecté au DC voisin) :
- COND1 (C1) : NB_ECH est égal à NBE, e.g. NBE = 3 ;
- COND2 (C2) : une durée prédéfinie TT s'est écoulée à partir du moment où le compteur électrique intelligent 122 est vu connecté au DC voisin lors de l'étape S510, e.g. TT est égal à une semaine ;
- COND3 (C3) : le compteur électrique intelligent 122 a reçu au moins N trames comprenant l'identifiant du DC ayant posé problème, i.e. PAN-ID₁₁₀ ;
- COND4 (C4), qui est testée en dernier : le DC voisin pose problème (situation identique à celle de l'étape S502 avec le DC voisin au lieu du DC favori, c'est-à-dire quand le compteur électrique intelligent 122 n'a pas reçu de trame du DC voisin auquel il est connecté pendant une durée prédéfinie T0, e.g. T0=24h ou quand il constate que la qualité d'échanges de trames au niveau applicatif avec son concentrateur de données voisin est insuffisante, et à condition qu'il écoute un autre concentrateur de données voisin auquel il n'est pas connecté).

Dans une variante de réalisation, la troisième condition COND3 est définie comme suit : le compteur électrique intelligent 122 a reçu au moins N trames comprenant l'identifiant, i.e. PAN-ID₁₁₀, du DC ayant posé problème avec un LQI au moins égal à LQIₘᵢₙ, e.g. LQIₘᵢₙ =64. Le LQI est une valeur représentative de la qualité en termes de rapport signal à bruit d'un lien entre deux noeuds du réseau.

Si COND1 ou COND2 est remplie le procédé reprend à l'étape S500, le concentrateur de données voisin devenant le nouveau DC favori. Si COND 3 est remplie le procédé continue à l'étape S520. Si COND4 est remplie, le procédé continue à l'étape S519.

Lors de l'étape S520, le compteur électrique intelligent 122 se déconnecte du DC voisin auquel il était connecté et démarre un processus de connexion à un DC, dit DC de remplacement, de même identifiant PAN-ID₁₁₀ que le DC ayant posé problème. A cet effet, le compteur électrique intelligent 122 implémente le procédé décrit en référence à la Fig. 3. Lors d'une étape S522, il vérifie si la connexion a fonctionné. Si c'est le cas, le procédé reprend à l'étape S500, le DC de remplacement devenant le nouveau DC favori. Sinon, NB_ECH est incrémenté de 1 lors d'une étape S524. Lors d'une étape S526, NB_ECH est comparé à NBE. Si NB_ECH est égal à NBE, le procédé reprend à l'étape S508 après avoir réinitialisé la variable X à la valeur T2 lors d'une étape S528, sinon il reprend à l'étape S518.

Lors de l'étape S519, le compteur électrique intelligent 122 se déconnecte du DC voisin auquel il est connecté. Puis, le procédé continue à l'étape S528.

Dans le cas particulier où un compteur électrique intelligent est éjecté, e.g. par envoi d'un message « Kick », par son DC favori, il essaye alors de se connecter à un concentrateur de données en implémentant le procédé décrit en référence à la Fig. 3. Les raisons d'une telle éjection sont variées. Il peut s'agir, par exemple, de forcer le compteur électrique intelligent à se connecter à un DC avec un PAN-ID différent, ou de forcer la « remise à zéro » de certains contextes de communication afin de revenir, après ré-enregistrement, à un état initial connu. Dès lors, ce compteur électrique intelligent n'exécute le procédé décrit en référence à la Fig. 5 que lorsque le nouveau DC auquel il se rattache devient son DC favori, c'est-à-dire au bout d'une durée T de connexion sans problème.

Le procédé décrit en référence à la Fig. 5 prend également en compte le cas où le DC favori était en panne passagère et s'est mis à remarcher, soit suite à un redémarrage (à distance ou sur site), soit de lui-même sans qu'il n'y ait eu besoin d'un redémarrage, soit suite à la disparition d'une perturbation réseau qui empêchait une connexion à ce DC.

La Fig. 6 illustre schématiquement un procédé de gestion de connexion d'un compteur électrique intelligent 122 à un concentrateur de données (DC) selon un mode particulier de réalisation. Le procédé décrit en lien avec le compteur électrique intelligent 122 est implémenté par tous les compteurs électriques intelligents du réseau PLCN 100.

Dans une étape S600, le compteur électrique intelligent 122 détecte une survenue d'événement. Par exemple, l'événement est un déclenchement périodique de l'algorithme de la Fig. 6. Selon un autre exemple, l'événement est une déconnexion dudit compteur électrique intelligent 122.

Dans une étape S602, le compteur électrique intelligent 122 vérifie être connecté, ou rattaché, à un DC. Si tel est le cas, un ensemble d'étapes S606, S608 et S610 est effectué ; sinon, une étape S604 est effectuée.

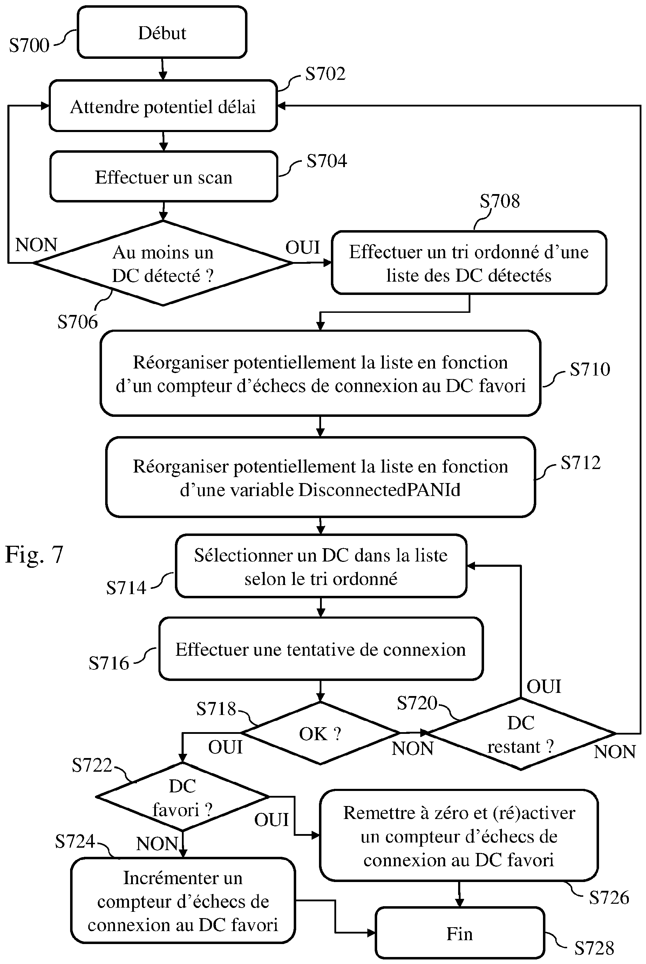

Dans l'étape S604, le compteur électrique intelligent 122 exécute un procédé de sélection et connexion, comme détaillé ci-après en relation avec la Fig. 7 dans un mode de réalisation particulier, afin de sélectionner et de se connecter (ou rattacher) à un DC, éventuellement par l'intermédiaire d'un autre compteur électrique intelligent.

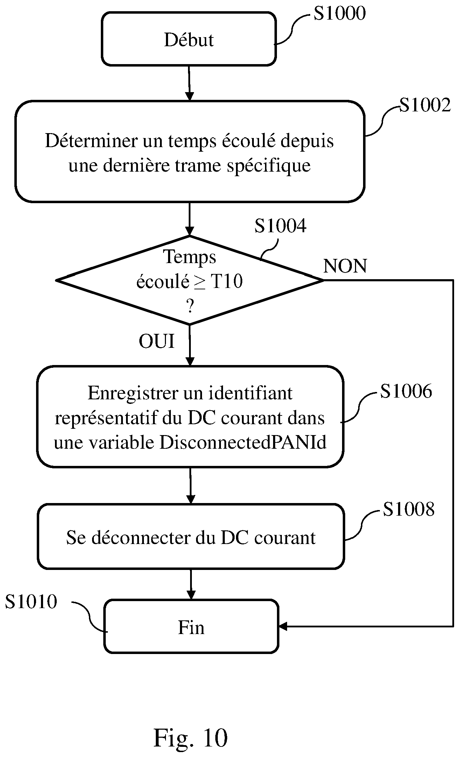

Dans l'étape S606, le compteur électrique intelligent 122 exécute un procédé de détection d'inactivité, comme détaillé ci-après en relation avec la Fig. 10 dans un mode de réalisation particulier, afin de détecter si le DC auquel est connecté ledit compteur électrique intelligent 122 est toujours actif du point de vue dudit compteur électrique intelligent 122.

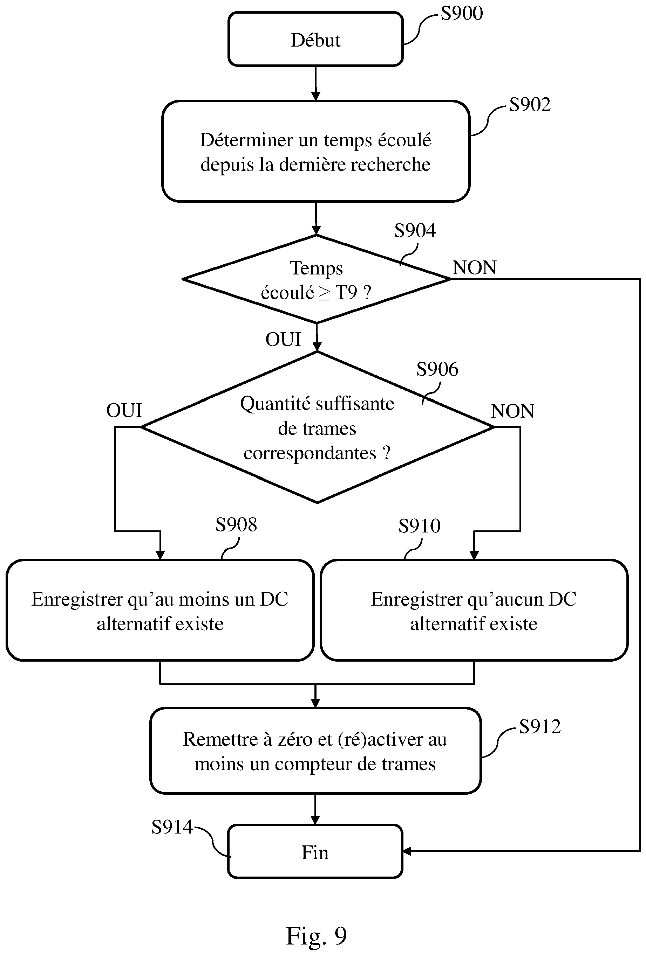

Dans l'étape S608, le compteur électrique intelligent 122 exécute un procédé de détection de DC alternatif, comme détaillé ci-après en relation avec la Fig. 9 dans un mode de réalisation particulier, afin de détecter si un DC alternatif existe pour éventuellement prendre le relai du DC auquel est connecté ledit compteur électrique intelligent 122.

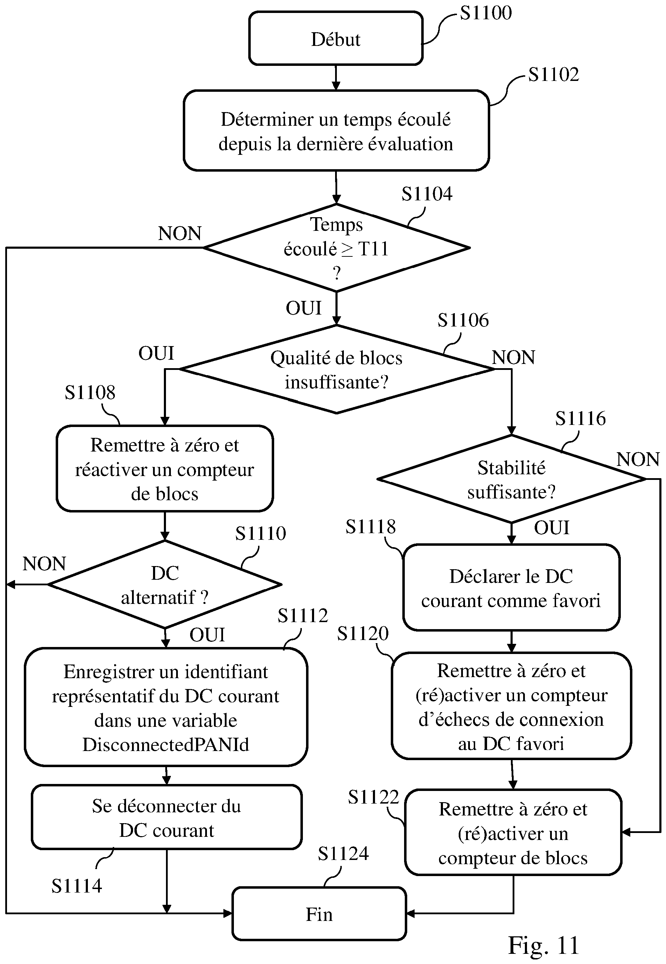

Dans l'étape S610, le compteur électrique intelligent 122 vérifie si un DC favori existe pour ledit compteur électrique intelligent 122, c'est-à-dire si un DC favori a été défini pour ledit compteur électrique intelligent 122 (voir notamment une étape S1118 décrite ci-après en relation avec la Fig. 11). Si tel est le cas, une étape S614 est effectuée ; sinon, une étape S612 est effectuée.

Dans l'étape S612, le compteur électrique intelligent 122 exécute un procédé d'évaluation du DC auquel est connecté ledit compteur électrique intelligent 122, comme détaillé ci-après en relation avec la Fig. 11 dans un mode de réalisation particulier, afin d'évaluer la pertinence de définir ce DC comme DC favori (si tel n'est pas déjà le cas) et au besoin de se déconnecter de ce DC pour se reconnecter à un DC alternatif (si un tel DC alternatif existe).

Dans l'étape S614, le compteur électrique intelligent 122 vérifie si le DC auquel est connecté ledit compteur électrique intelligent 122 (DC actuel) est le DC favori dudit compteur électrique intelligent 122. Si tel est le cas, une étape S616 est effectuée ; sinon, un ensemble d'étapes 5618 et S620 est effectué.

Dans l'étape S616, le compteur électrique intelligent 122 exécute le procédé d'évaluation du DC auquel est connecté ledit compteur électrique intelligent 122, comme déjà mentionné vis-à-vis de l'étape S612.

Dans l'étape S618, le compteur électrique intelligent 122 exécute le procédé d'évaluation du DC auquel est connecté ledit compteur électrique intelligent 122, comme déjà mentionné vis-à-vis des étapes S612 et S616.

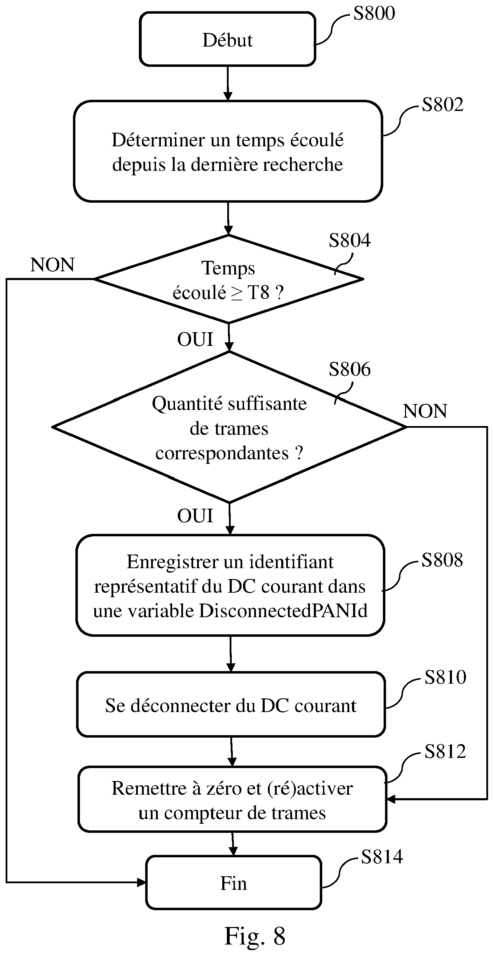

Dans l'étape S620, le compteur électrique intelligent 122 exécute un procédé de recherche du DC favori, comme détaillé ci-après en relation avec la Fig. 8 dans un mode de réalisation particulier, afin de se reconnecter au DC favori, plus particulièrement dans le cas où un DC de remplacement a été introduit dans le réseau PLCN 100 pour remplacer un DC qui a posé problème et qui était le DC favori dudit compteur électrique intelligent 122.

La Fig. 7 illustre schématiquement un procédé de sélection et connexion d'un compteur électrique intelligent 122 à un concentrateur de données (DC) dans le cadre du procédé de gestion de la Fig. 6. Le procédé de la Fig. 7 démarre dans une étape S700.

Dans une étape S702, le compteur électrique intelligent 122 attend un potentiel délai. Par exemple, le potentiel délai est de valeur aléatoire entre 0 et une borne supérieure. Par exemple, la borne supérieure est un multiple d'une valeur de compteur de tentatives de connexion à un DC à chaque exécution de l'algorithme de la Fig. 7. Dans un mode de réalisation particulier, lors de la première exécution de l'étape S702 à chaque exécution de l'algorithme de la Fig. 7, le compteur électrique intelligent 122 applique un délai nul. Dans une étape S704, le compteur électrique intelligent 122 effectue un scan afin de découvrir son environnement proche. Plus précisément, le compteur électrique intelligent 122 transmet des trames de balises *BeaconRequest* auxquelles répondent chaque compteur électrique intelligent ou concentrateur de données (DC) les recevant. Le compteur électrique intelligent 122 est ainsi capable de déterminer quel(s) DC candidat(s) existe(nt) pour se connecter.

Dans une étape S706, le compteur électrique intelligent 122 vérifie si au moins un DC a été détecté suite au scan. Si tel est le cas, une étape S708 est effectuée ; sinon, l'étape S702 est répétée, en forçant potentiellement l'application d'un délai non nul.

Dans l'étape S708, le compteur électrique intelligent 122 effectue un tri ordonné d'une liste L des DC détectés (dans le cas où plusieurs DC ont été détectés lors du scan) en fonction d'une qualité de communication pour chaque DC (ou PAN) détecté. Dans un mode réalisation particulier, le compteur électrique intelligent 122 retient dans la liste L un unique compteur électrique intelligent ou concentrateur de données par PAN, typiquement celui présentant les meilleures conditions de communication (e.g., LQI).

Dans une étape S710, le compteur électrique intelligent 122 réorganise potentiellement la liste L en fonction d'un compteur d'échecs de connexion au DC favori. Plus précisément, si les critères suivants sont respectés :
- le DC favori est défini pour ledit compteur électrique intelligent 122 ;
- le DC favori est identifié dans la liste L (e.g., par son identifiant PAN-ID associé) ; et
- la valeur du compteur d'échecs de connexion au DC favori est inférieure à un seuil T7 prédéfini (par exemple, T7 est égal à 3) ;
alors le DC favori est placé en début de la liste L. Ainsi, une connexion au DC favori va être tentée en premier lieu.

Dans une étape S712, le compteur électrique intelligent 122 réorganise potentiellement la liste L en fonction d'une information indiquant de quel DC ledit compteur électrique intelligent 122 s'est dernièrement déconnecté, par exemple comme indiqué dans une variable DisconnectedPANId. Plus précisément, si le DC en question est identifié dans la liste L (e.g., par son identifiant PAN-ID associé), alors le DC en question est placé à la fin de la liste L. Ainsi, une connexion à tout autre DC va être tentée avant que le compteur électrique intelligent 122 n'ait à se reconnecter au DC duquel ledit le compteur électrique intelligent 122 vient de se déconnecter.

Dans une étape S714, le compteur électrique intelligent 122 sélectionne un DC dans la liste L. A chaque itération de l'étape S714, le compteur électrique intelligent 122 sélectionne un DC selon l'ordre de la liste L.

Dans une étape S716, le compteur électrique intelligent 122 effectue une tentative de connexion (ou rattachement) au DC sélectionné à l'étape S714. Comme déjà mentionné, cette étape comprend généralement l'authentification du compteur électrique intelligent par échange de données d'identification entre le compteur électrique intelligent et le DC au besoin au travers de compteurs électriques intelligents servant de relais.

Dans une étape S718, le compteur électrique intelligent 122 vérifie si la tentative de connexion de l'étape S714 s'est déroulée avec succès. Si tel est le cas, une étape S722 est effectuée ; sinon, une étape S720 est effectuée.

Dans l'étape S720, le compteur électrique intelligent 122 vérifie s'il reste au moins un DC dans la liste L pour lequel aucune tentative de connexion n'a été effectuée. si tel est le cas, l'étape S714 est répétée en sélectionnant un autre DC restant dans la liste L ; sinon, l'étape S702 est répétée, potentiellement en augmentant le délai d'attente.

Dans l'étape S722, le compteur électrique intelligent 122 vérifie si le DC auquel ledit compteur électrique intelligent 122 s'est connecté est le DC favori dudit compteur électrique intelligent 122. Si tel est le cas, une étape S726 est effectuée ; sinon, une étape S724 est effectuée.

Dans l'étape S724, le compteur électrique intelligent 122 incrémente d'une unité le compteur d'échecs de connexion à son DC favori. Puis, une étape S728 est effectuée, dans laquelle il est mis fin à l'algorithme de la Fig. 7.

Dans l'étape S726, le compteur électrique intelligent 122 remet à zéro et réactive le compteur d'échecs de connexion à son DC favori. Puis, l'étape S728 est effectuée.

La Fig. 8 illustre schématiquement un procédé de recherche du DC favori dans le cadre du procédé de gestion de la Fig. 6. Le procédé de la Fig. 8 démarre dans une étape S800. Dans une étape S802, le compteur électrique intelligent 122 détermine un temps écoulé depuis la dernière recherche du DC favori.

Dans une étape S804, le compteur électrique intelligent 122 vérifie si le temps écoulé en question est supérieur ou égal à une durée seuil prédéfinie T8. Par exemple, la durée seuil prédéfinie T8 est égale à 3 heures. Si tel est le cas, une étape S806 est effectuée ; sinon, une étape S814 est effectuée, dans laquelle il est mis fin au procédé de la Fig. 8.

Dans l'étape S806, le compteur électrique intelligent 122 vérifie si une quantité de trames reçues d'un autre DC que celui auquel est connecté (ou rattaché) ledit compteur électrique intelligent 122, où cet autre DC est le DC favori dudit compteur électrique intelligent 122, est suffisante pour se reconnecter audit DC favori. Par exemple, le compteur électrique intelligent 122 vérifie si ladite quantité de trames est supérieure ou égale à une quantité seuil QFF prédéfinie (e.g., QFF = 100). Si tel est le cas, une étape S808 est effectuée ; sinon, une étape S812 est effectuée.

Dans l'étape S808, le compteur électrique intelligent 122 enregistre une information indiquant de quel DC ledit compteur électrique intelligent 122 s'est dernièrement déconnecté. Ainsi, par exemple, le compteur électrique intelligent 122 enregistre un identifiant représentatif dudit DC (typiquement son identifiant PAN-ID associé) dans la variable DisconnectedPANId. Puis, dans une étape S810, le compteur électrique intelligent 122 se déconnecte du DC en question, et l'étape S812 est ensuite effectuée. Alors, en application de l'algorithme de la Fig. 6, le compteur électrique intelligent 122 va se reconnecter à son DC favori. Ainsi, lorsque le DC favori du compteur électrique intelligent 122 a rencontré un problème et a été remplacé, le compteur électrique intelligent 122 va se reconnecter au DC de remplacement qui a été introduit dans le réseau PLCN 100.

Dans l'étape S812, le compteur électrique intelligent 122 remet à zéro un compteur de trames (celui utilisé pour déterminer la quantité de trames susmentionnée à l'étape S806) et le réactive (ou l'active pour la toute première exécution de l'étape S812). Puis, il est mis fin à l'algorithme de la Fig. 8 dans l'étape S814.

La Fig. 9 illustre schématiquement un procédé de recherche (ou de détection) de DC alternatif dans le cadre du procédé de gestion de la Fig. 6. Le procédé de la Fig. 9 démarre dans une étape S900.

Dans une étape S902, le compteur électrique intelligent 122 détermine un temps écoulé depuis la dernière recherche de DC alternatif.

Dans une étape S904, le compteur électrique intelligent 122 vérifie si le temps écoulé en question est supérieur ou égal à une durée seuil prédéfinie T9. Par exemple, la durée seuil prédéfinie T9 est égale à 6 heures. Si tel est le cas, une étape S906 est effectuée ; sinon, une étape S914 est effectuée, dans laquelle il est mis fin au procédé de la Fig. 9.

Dans l'étape S906, le compteur électrique intelligent 122 vérifie si une quantité de trames reçues d'un autre DC que celui auquel est connecté (ou rattaché) ledit compteur électrique intelligent 122 est suffisante pour se reconnecter, au besoin, à cet autre DC (DC alternatif). Par exemple, le compteur électrique intelligent 122 vérifie si ladite quantité de trames est supérieure ou égale à une quantité seuil QFA prédéfinie (e.g., QFA = 100). A noter qu'il peut y avoir plusieurs autres DC qui remplissent la condition ci-dessus, auquel cas plusieurs DC alternatifs sont disponibles. Si au moins un autre DC est ainsi détecté, une étape S908 est effectuée ; sinon, une étape S910 est effectuée.

Dans l'étape S908, le compteur électrique intelligent 122 enregistre qu'il existe au moins un DC alternatif auquel ledit compteur électrique intelligent 122 a la possibilité de se rattacher. Par exemple, le compteur électrique intelligent 122 enregistre cette information grâce à un booléen AlternatePANPresent avec la valeur « VRAI ». Puis, une étape S912 est effectuée.

Dans l'étape S910, le compteur électrique intelligent 122 enregistre qu'il n'existe pas de DC alternatif auquel ledit compteur électrique intelligent 122 a la possibilité de se rattacher. Par exemple, le compteur électrique intelligent 122 enregistre cette information grâce au booléen AlternatePANPresent avec la valeur « FAUX ». Puis, une étape S912 est effectuée.

Dans l'étape S912, le compteur électrique intelligent 122 remet à zéro au moins un compteur de trames (celui ou ceux utilisés pour déterminer la quantité de trames susmentionnée à l'étape S906) et le ou les réactive (ou l'active ou les active pour la toute première exécution de l'étape S912). Puis, il est mis fin à l'algorithme de la Fig. 9 dans l'étape S914.

La Fig. 10 illustre schématiquement un procédé de détection d'inactivité dans le cadre du procédé de gestion de la Fig. 6. Le procédé de la Fig. 10 démarre dans une étape S 1000. Dans une étape S 1002, le compteur électrique intelligent 122 détermine un temps écoulé depuis la dernière réception d'une trame spécifique représentative d'une activité du DC auquel est connecté (ou rattaché) le compteur électrique intelligent 122. La trame spécifique en question est par exemple une trame conforme au protocole de communication DLMS ou une trame conforme au protocole de communication ICMP (acronyme anglais de « Internet Control Message Protocol »).

Dans une étape S 1004, le compteur électrique intelligent 122 vérifie si le temps écoulé en question est supérieur ou égal à une durée seuil prédéfinie T10 (équivalente à T0 dans le cadre des Figs. 4 et 5). Par exemple, la durée seuil prédéfinie T10 est égale à 24 heures. Si tel est le cas, le compteur électrique intelligent 122 considère que le DC en question pose problème, et une étape S 1006 est effectuée ; sinon, cela signifie que le DC en question est toujours actif et ne pose pas de problème, et une étape S 1010 est effectuée, dans laquelle il est mis fin au procédé de la Fig. 10.

Dans l'étape S1006, le compteur électrique intelligent 122 enregistre une information indiquant de quel DC ledit compteur électrique intelligent 122 s'est dernièrement déconnecté. Ainsi, par exemple, le compteur électrique intelligent 122 enregistre un identifiant représentatif dudit DC (typiquement son identifiant PAN-ID associé) dans la variable DisconnectedPANId. Puis, dans une étape S 1008, le compteur électrique intelligent 122 se déconnecte du DC en question, et il est mis fin au procédé de la Fig. 10 dans l'étape S1010. Alors, en application de l'algorithme de la Fig. 6, le compteur électrique intelligent 122 va se reconnecter à un DC alternatif. Ce cas peut notamment survenir lorsque le compteur électrique intelligent 122 était connecté à son DC favori et que celui-ci doit être remplacé suite à un problème rencontré.

L'approche décrite en relation avec la Fig. 10 pour déterminer que le DC en question pose problème peut être appliquée dans le cadre des procédés décrits ci-avant en relation avec les Figs. 4 et 5.

La Fig. 11 illustre schématiquement un procédé d'évaluation du DC auquel est connecté (ou rattaché) le compteur électrique intelligent 122 (DC actuel) dans le cadre du procédé de gestion de la Fig. 6. Le procédé de la Fig. 11 démarre dans une étape S1100.

Dans une étape S1102, le compteur électrique intelligent 122 détermine un temps écoulé depuis la dernière évaluation du DC auquel est connecté (ou rattaché) le compteur électrique intelligent 122.

Dans une étape S1104, le compteur électrique intelligent 122 vérifie si le temps écoulé en question est supérieur ou égal à une durée seuil prédéfinie T11. Par exemple, la durée seuil prédéfinie T11 est égale à 6 heures. Si tel est le cas, une étape S1106 est effectuée ; sinon, une étape S1124 est effectuée, dans laquelle il est mis fin à l'algorithme de la Fig. 11. Dans l'étape S1106, le compteur électrique intelligent 122 vérifie si la qualité des blocs de données reçus dans des trames (potentiellement relayées) en provenance du DC auquel est connecté (ou rattaché) le compteur électrique intelligent 122 est insuffisante. Par exemple, le compteur électrique intelligent 122 vérifie si des blocs incomplets de données sont reçus dans des trames (potentiellement relayées) en provenance du DC auquel est connecté (ou rattaché) le compteur électrique intelligent 122 en quantité supérieure ou égal à une quantité seuil prédéfinie T12. Par exemple, dans le cadre de transfert de blocs de données conformément au protocole de communication DLMS, T12 = 6. Un taux d'erreur peut aussi être considéré. Si la qualité des blocs de données reçus est insuffisante, une étape S1108 est effectuée ; sinon, une étape S1116 est effectuée.

Dans l'étape S1108, le compteur électrique intelligent 122 remet à zéro un compteur de blocs (celui utilisé, dans un mode de réalisation particulier, pour déterminer la quantité de blocs incomplets à l'étape S1106) et le réactive. Puis, une étape S1110 est effectuée.

Dans l'étape S1110, le compteur électrique intelligent 122 vérifie si un DC alternatif existe. Par exemple, comme déjà évoqué, cette information peut être stockée dans le booléen AlternatePANPresent, avec la valeur « VRAI » en cas de présence de DC alternatif ou avec la valeur « FAUX » en cas d'absence de DC alternatif. Si un DC alternatif existe, une étape S1112 est effectuée ; sinon, une étape S1124 est effectuée, dans laquelle il est mis fin à l'algorithme de la Fig. 11.

Dans l'étape S1112, le compteur électrique intelligent 122 enregistre une information indiquant de quel DC ledit compteur électrique intelligent 122 s'est dernièrement déconnecté. Ainsi, par exemple, le compteur électrique intelligent 122 enregistre un identifiant représentatif dudit DC (typiquement son identifiant PAN-ID associé) dans la variable DisconnectedPANId. Puis, dans une étape S1114, le compteur électrique intelligent 122 se déconnecte du DC en question, et l'étape S1124 est ensuite effectuée. Alors, en application de l'algorithme de la Fig. 6, le compteur électrique intelligent 122 va chercher à se reconnecter à un DC présentant une meilleure qualité de communication, et de préférence à son DC favori.

Dans l'étape S1116, le compteur électrique intelligent 122 vérifie si le DC auquel est connecté (ou rattaché) ledit compteur électrique intelligent 122 présente une stabilité suffisante pour devenir le DC favori dudit compteur électrique intelligent 122 (si le DC en question n'est pas déjà le DC favori dudit compteur électrique intelligent 122). Par exemple, le compteur électrique intelligent 122 vérifie si un temps écoulé depuis une dernière erreur de communication avec le DC en question est supérieur ou égal à une durée seuil T13 prédéfinie. En d'autres termes, le compteur électrique intelligent 122 vérifie si un temps écoulé sans anomalie de communication avec le DC en question est supérieur ou égal à la durée seuil T13 prédéfinie (équivalente à la durée prédéfinie T mentionnée en relation avec les Figs. 4 et 5). Par exemple, T13 est égal à 1 semaine. Si tel est le cas, une étape S1118 est effectuée ; sinon, une étape S1122 est effectuée.

Dans l'étape S1118, le compteur électrique intelligent 122 déclare le DC auquel est connecté (ou rattaché) ledit compteur électrique intelligent 122 comme DC favori. Ainsi, par exemple, le compteur électrique intelligent 122 enregistre un identifiant représentatif dudit DC (typiquement son identifiant PAN-ID associé) dans une variable UsualPANId. Puis, dans une étape S1120, le compteur électrique intelligent 122 remet à zéro et réactive (ou active en cas de première déclaration d'un DC favori pour ledit compteur électrique intelligent 122) le compteur d'échecs de connexion à son DC favori. Puis, l'étape 51122 est effectuée.

Dans l'étape S1122, le compteur électrique intelligent 122 remet à zéro le compteur de blocs (celui utilisé, dans un mode de réalisation particulier, pour déterminer la quantité de blocs incomplets à l'étape S1106) et le réactive (ou l'active pour la toute première exécution de l'étape S1 122). Puis, l'étape S1124 est effectuée.

## Revendications

1. Un procédé de reconnexion d'un compteur électrique intelligent connecté à un concentrateur de données, dit concentrateur de données courant, dans un réseau de communication par courants porteurs en ligne ou par radiofréquences pour la gestion automatisée de comptage dans le cadre d'un service de distribution électrique, ledit procédé étant **caractérisé en ce qu'**il comprend les étapes suivantes implémentées par ledit compteur électrique intelligent :
- se déconnecter (S402, S504) du concentrateur de données courant dans le cas où le ledit concentrateur de données courant pose problème (S400, S502) ;
- se connecter (S406, S508) à un concentrateur de données voisin différent dudit concentrateur de données courant ;
- écouter (S410, S518) les trames contenant un identifiant dudit concentrateur de données courant ;
- se déconnecter (S412, S414, S520) du concentrateur de données voisin et se reconnecter à un concentrateur de données utilisant le même identifiant que le concentrateur de données courant quand au moins N trames contenant l'identifiant dudit concentrateur de données courant sont reçues, avec N un entier supérieur ou égal à 1.

2. Le procédé selon la revendication 1, dans lequel se déconnecter du concentrateur de données voisin et se reconnecter à un concentrateur de données utilisant le même identifiant que le concentrateur de données courant quand au moins N trames contenant l'identifiant dudit concentrateur de données courant sont reçues comprend se déconnecter du concentrateur de données voisin et se reconnecter à un concentrateur de données utilisant le même identifiant que le concentrateur de données courant quand au moins N trames contenant l'identifiant dudit concentrateur de données courant sont reçues et une qualité de lien entre ledit compteur électrique intelligent et ledit concentrateur de données utilisant le même identifiant que le concentrateur de données courant est supérieure à une valeur de seuil prédéfinie.

3. Le procédé selon la revendication 1 ou 2, comprenant une étape consistant à déterminer que ledit concentrateur de données courant pose problème quand ledit compteur électrique intelligent n'a reçu aucune trame dudit concentrateur de données courant pendant une durée prédéfinie T0.

4. Le procédé selon la revendication 3, dans lequel le procédé comprend une étape consistant à déterminer que ledit concentrateur courant pose problème quand ledit compteur électrique intelligent n'a reçu aucune trame dudit concentrateur de données courant pendant une durée prédéfinie T0 ou que la qualité d'échanges de trames entre ledit compteur électrique intelligent et le concentrateur de données courant est insuffisante, et à condition que ledit compteur électrique intelligent soit à l'écoute d'un concentrateur de données voisin différent dudit concentrateur de données courant.

5. Le procédé selon la revendication 1 ou 2, comprenant une étape consistant à déterminer que ledit concentrateur de données courant pose problème quand un temps écoulé depuis la dernière réception par ledit compteur électrique intelligent d'une trame spécifique représentative d'une activité du concentrateur de données courant est supérieur ou égal à une durée prédéfinie T0.

6. Le procédé selon la revendication 3, 4 ou 5, dans lequel T0 est égal à 24 heures.

7. Le procédé selon l'une des revendications 1 à 6, dans lequel ledit concentrateur de données courant est un concentrateur de données, dit concentrateur de données favori, pour lequel la connexion avec ledit compteur électrique intelligent a fonctionné sans anomalie pendant une durée prédéfinie T.

8. Le procédé selon la revendication 7, dans lequel T est égal à une semaine.

9. Le procédé selon la revendication 7 ou 8, dans lequel le compteur électrique intelligent établit une liste L ordonnée de concentrateurs de données auxquels potentiellement se connecter, le compteur électrique intelligent réorganise la liste L en plaçant le concentrateur de données favori en début de liste si la valeur d'un compteur d'échecs de connexion audit concentrateur de données favori est inférieure à un seuil T7 prédéfini, et le compteur électrique intelligent réorganise la liste L en plaçant le concentrateur de données voisin duquel ledit compteur électrique intelligent s'est déconnecté en fin de liste.

10. Le procédé selon la revendication 9, dans lequel T7 est égal à 3.

11. Le procédé selon l'une des revendications 1 à 10, dans lequel se connecter à un concentrateur de données voisin comprend :
- mettre l'identifiant du concentrateur de données courant sur liste noire pendant une durée prédéfinie T1 ;
- démarrer un processus de connexion à un concentrateur de données du réseau pour se connecter à un concentrateur de données voisin différent dudit concentrateur de données courant.

12. Le procédé selon la revendication 11, dans lequel T1 est égal à 24 heures.

13. Un compteur électrique intelligent (121, 122,..., 136; 200) connecté à un concentrateur de données (110, 112), dit concentrateur de données courant, dans un réseau de communication par courants porteurs en ligne (100) ou par radiofréquences pour la gestion automatisée de comptage dans le cadre d'un service de distribution électrique, ledit compteur électrique intelligent comprenant :
- des moyens pour se déconnecter du concentrateur de données courant dans le cas où le ledit concentrateur de données courant pose problème ;
- des moyens pour se connecter à un concentrateur de données voisin différent dudit concentrateur de données courant ;
- des moyens pour écouter des trames contenant l'identifiant dudit concentrateur de données courant ;
- des moyens pour se déconnecter du concentrateur de données voisin et pour se connecter à un concentrateur de données utilisant le même identifiant que le concentrateur de données courant quand au moins N trames sont reçues, avec N un entier supérieur ou égal à 1.

14. Un produit programme d'ordinateur **caractérisé en ce qu'**il comprend des instructions pour implémenter le procédé de reconnexion selon l'une quelconque des revendications 1 à 12, lorsque ledit programme est exécuté par un processeur.

15. Un support de stockage **caractérisé en ce qu'**il stocke un programme d'ordinateur comprenant des instructions pour implémenter le procédé de reconnexion selon l'une quelconque des revendications 1 à 12, lorsque ledit programme est exécuté par un processeur.

## Patentansprüche

1. Verfahren zur Wiederverbindung eines intelligenten Stromzählers, der mit einem aktueller Datenkonzentrator genannten Datenkonzentrator verbunden ist, in einem Powerline- oder Funk-Kommunikationsnetz zur automatisierten Zählerverwaltung im Rahmen eines Stromverteilungsdiensts, wobei das Verfahren **dadurch gekennzeichnet ist, dass** es die folgenden vom intelligenten Stromzähler implementierten Schritte enthält:
- sich vom aktuellen Datenkonzentrator in dem Fall zu trennen (S402, S504), in dem der aktuelle Datenkonzentrator Probleme verursacht (S400, S502);
- sich mit einem benachbarten Datenkonzentrator anders als der aktuelle Datenkonzentrator zu verbinden (S406, S508);
- die Frames abzuhören (S410, S518), die eine Kennung des aktuellen Datenkonzentrators enthalten;
- sich vom benachbarten Datenkonzentrator zu trennen (S412, S414, S520) und mit einem Datenkonzentrator wiederzuverbinden, der die gleiche Kennung verwendet wie der aktuelle Datenkonzentrator, wenn mindestens N die Kennung des aktuellen Datenkonzentrators enthaltende Frames empfangen werden, mit N einer ganzen Zahl größer als oder gleich 1.

2. Verfahren nach Anspruch 1, wobei die Trennung vom benachbarten Datenkonzentrator und die Wiederverbindung mit einem Datenkonzentrator, der die gleiche Kennung verwendet wie der aktuelle Datenkonzentrator, wenn mindestens N die Kennung des aktuellen Datenkonzentrators enthaltende Frames empfangen werden, die Trennung vom benachbarten Datenkonzentrator und die Wiederverbindung mit einem Datenkonzentrator enthält, der die gleiche Kennung verwendet wie der aktuelle Datenkonzentrator, wenn mindestens N die Kennung des aktuellen Datenkonzentrators enthaltende Frames empfangen werden und eine Verbindungsqualität zwischen dem intelligenten Stromzähler und dem Datenkonzentrator, der die gleiche Kennung verwendet wie der aktuelle Datenkonzentrator, höher ist als ein vordefinierter Schwellwert.

3. Verfahren nach Anspruch 1 oder 2, das einen Schritt enthält, der darin besteht zu bestimmen, dass der aktuelle Datenkonzentrator Probleme verursacht, wenn der intelligente Stromzähler während einer vordefinierten Dauer T0 keinen Frame vom aktuellen Datenkonzentrator empfangen hat.

4. Verfahren nach Anspruch 3, wobei das Verfahren einen Schritt enthält, der darin besteht zu bestimmen, dass der aktuelle Konzentrator Probleme verursacht, wenn der intelligente Stromzähler während einer vordefinierten Dauer T0 keinen Frame vom aktuellen Datenkonzentrator empfangen hat oder wenn die Qualität des Austauschs von Frames zwischen dem intelligenten Stromzähler und dem aktuellen Datenkonzentrator unzureichend ist, und unter der Bedingung, dass der intelligente Stromzähler einen benachbarten Datenkonzentrator abhört, der sich vom aktuellen Datenkonzentrator unterscheidet.

5. Verfahren nach Anspruch 1 oder 2, das einen Schritt enthält, der darin besteht zu bestimmen, dass der aktuelle Datenkonzentrator Probleme verursacht, wenn eine seit dem letzten Empfang durch den intelligenten Stromzähler eines spezifischen Frames, der für eine Aktivität des aktuellen Datenkonzentrators repräsentativ ist, vergangene Zeit größer als eine oder gleich einer vordefinierten Dauer T0 ist.

6. Verfahren nach Anspruch 3, 4 oder 5, wobei T0 gleich 24 Stunden ist.

7. Verfahren nach einem der Ansprüche 1 bis 6, wobei der aktuelle Datenkonzentrator ein bevorzugter Datenkonzentrator genannter Datenkonzentrator ist, für den die Verbindung mit dem intelligenten Stromzähler während einer vordefinierten Dauer T ohne Anomalie funktioniert hat.

8. Verfahren nach Anspruch 7, wobei T gleich einer Woche ist.

9. Verfahren nach Anspruch 7 oder 8, wobei der intelligente Stromzähler eine geordnete Liste L von Datenkonzentratoren erstellt, mit denen sich möglicherweise verbunden werden soll, der intelligente Stromzähler die Liste L reorganisiert, indem er den bevorzugten Datenkonzentrator am Listenanfang platziert, wenn der Wert eines Zählers von Fehlschlägen einer Verbindung mit dem bevorzugten Datenkonzentrator unter einer vordefinierten Schwelle T7 ist, und der intelligente Stromzähler die Liste L reorganisiert, indem er den benachbarten Datenkonzentrator, von dem der intelligente Stromzähler sich getrennt hat, am Listenende platziert.

10. Verfahren nach Anspruch 9, wobei T7 gleich 3 ist.

11. Verfahren nach einem der Ansprüche 1 bis 10, wobei die Verbindung mit einem benachbarten Datenkonzentrator enthält:
- die Kennung des aktuellen Datenkonzentrators während einer vordefinierten Dauer T1 auf eine schwarze Liste zu setzen;
- einen Verbindungsprozess mit einem Datenkonzentrator des Netzes zu starten, um sich mit einem benachbarten Datenkonzentrator anders als der aktuelle Datenkonzentrator zu verbinden.

12. Verfahren nach Anspruch 11, wobei T1 gleich 24 Stunden ist.

13. Intelligenter Stromzähler (121, 122, ... , 136; 200), der mit einem aktueller Datenkonzentrator genannten Datenkonzentrator (110, 112) in einem Powerline- (100) oder Funkkommunikationsnetz zur automatisierten Zählerverwaltung im Rahmen eines Stromverteilungsdiensts verbunden ist, wobei der intelligente Stromzähler enthält:
- Einrichtungen, um sich in dem Fall vom aktuellen Datenkonzentrator zu trennen, in dem der aktuelle Datenkonzentrator Probleme verursacht;
- Einrichtungen, um sich mit einem benachbarten Datenkonzentrator anders als der aktuelle Datenkonzentrator zu verbinden;
- Einrichtungen, um Frames abzuhören, die die Kennung des aktuellen Datenkonzentrators enthalten;
- Einrichtungen, um sich vom benachbarten Datenkonzentrator zu trennen und mit einem Datenkonzentrator zu verbinden, der die gleiche Kennung verwendet wie der aktuelle Datenkonzentrator, wenn mindestens N Frames empfangen werden, mit N einer ganzen Zahl größer als oder gleich 1.

14. Computerprogrammprodukt, **dadurch gekennzeichnet, dass** es Anweisungen enthält, um das Wiederverbindungsverfahren nach einem der Ansprüche 1 bis 12 zu implementieren, wenn das Programm von einem Prozessor ausgeführt wird.

15. Speicherträger, **dadurch gekennzeichnet, dass** er ein Computerprogramm speichert, das Anweisungen enthält, um das Wiederverbindungsverfahren nach einem der Ansprüche 1 bis 12 zu implementieren, wenn das Programm von einem Prozessor ausgeführt wird.

## Claims

1. A method for reconnecting a smart electricity meter connected to a data concentrator, referred to as the current data concentrator, in a powerline or radio-frequency communication network for automated metering management in the context of an electrical distribution service, said method being **characterised in that** it comprises the following steps performed by said smart electricity meter:
- disconnecting (S402, S504) from the current data concentrator in the case where said current data concentrator is posing a problem (S400, S502);
- connecting (S406, S508) to a neighbouring data concentrator different from said current data concentrator;
- listening (S410, S518) to the frames containing an identifier of said current data concentrator;
- disconnecting (S412, S414, S520) from the neighbouring data concentrator and reconnecting to a data concentrator using the same identifier as the current data concentrator when at least N frames containing the identifier of said current data concentrator are received, with N an integer greater than or equal to 1.

2. The method according to claim 1, wherein disconnecting from the neighbouring data concentrator and reconnecting to a data concentrator using the same identifier as the current data concentrator when at least N frames containing the identifier of said current data concentrator are received comprises disconnecting from the neighbouring data concentrator and reconnecting to a data concentrator using the same identifier as the current data concentrator when at least N frames containing the identifier of said current data concentrator are received and a quality of link between said smart electricity meter and said data concentrator using the same identifier as the current data concentrator is above a predefined threshold value.

3. The method according to claim 1 or 2, comprising a step consisting in determining that said current data concentrator is posing a problem when said smart electricity meter has received no frame from said current data concentrator during a predefined time T0.

4. The method according to claim 3, wherein the method compises a step consisting in determining that said current concentrator is posing a problem when said smart electricity meter has received no frame from said current data concentrator during a predefined time T0 or the quality of exchanges of frames between said smart electricity meter and the current data concentrator is insufficient, and provided that said smart electricity meter is listening to a neighbouring data concentrator different from said current data concentrator.

5. The method according to claim 1 or 2, comprising a step consisting in determining that said current data concentrator is posing a problem when a time elapsed since the last reception by said smart electricity meter of a specific frame representing an activity of the current data concentrator is greater than or equal to a predefined time T0.

6. The method according to claim 3, 4 or 5, wherein TO is equal to 24 hours.

7. The method according to one of claims 1 to 6, wherein said current data concentrator is a data concentrator, referred to as the favourite data concentrator, for which the connection with said smart electricity meter has operated without anomaly for a predefined time T.

8. The method according to claim 7, wherein T is equal to one week.

9. The method according to claim 7 or 8, wherein the smart electricity meter establishes an ordered list L of data concentrators to which potentially to connect, the smart electricity meter reorganises the list L by placing the favourite data concentrator at the start of the list if the value of a counter of failures of connection to said favourite data concentrator is below a predefined threshold T7, and the smart electricity meter reorganises the list L by placing the neighbouring data concentrator from which said smart electricity meter has disconnected at the end of the list.

10. The method according to claim 9, wherein T7 is equal to 3.

11. The method according to one of claims 1 to 10, wherein connecting to a neighbouring data concentrator comprises:
- putting the identifier of the current data concentrator on a blacklist for a predefined time T1;
- starting a process of connection to a data concentrator of the network to connect to a neighbouring data concentrator different from said current data concentrator.

12. The method according to claim 11, wherein T1 is equal to 24 hours.

13. A smart electricity meter (121, 122,....,136;200) connected to a data concentrator (110, 112), referred to as the current data concentrator, in a powerline or radio-frequency communication network (100) for automated meter management in the context of an electrical distribution service, said smart electricity meter comprising:
- means for disconnecting from the current data concentrator in the case where said current data concentrator is posing a problem;
- means for connecting to a neighbouring data concentrator different from said current data concentrator;
- means for listening to frames containing the identifier of said current data concentrator;
- means for disconnecting from the neighbouring data concentrator and for connecting to a data concentrator using the same identifier as the current data concentrator when at least N frames are received, with N an integer greater than or equal to 1.

14. A computer program product **characterised in that** it comprises instructions for implementing the reconnection method according to any one of claims 1 to 12, when said program is executed by a processor.

15. A storage medium **characterised in that** it stores a computer program comprising instructions for implementing the reconnection method according to any one of claims 1 to 12 when said program is executed by a processor.
